# FASCICULE DE BREVET EUROPEEN

(11) **EP 1 527 292 B1**
(45) Date de publication et mention de la délivrance du brevet: **19.03.2008**
(21) Numéro de dépôt: 03756526.4
(22) Date de dépôt: 06.08.2003
(51) Int. Cl.: F16H 45/02

(54) **APPAREIL D'ACCOUPLEMENT HYDROCINETIQUE, NOTAMMENT POUR UN VEHICULE AUTOMOBILE**
DREHMOMENTWANDLER FÜR FAHRZEUG
HYDROKINETIC COUPLING DEVICE INTENDED, IN PARTICULAR, FOR A MOTOR VEHICLE

(30) Priorité: 06.08.2002 FR 0209974
(43) Date de publication de la demande: 04.05.2005
(73) Titulaire: Valeo Embrayages, 80009 Amiens Cedex 1 (FR)
(72) Inventeur: ARHAB, Rabah, F-95350 SAINT-BRICE-SOUS-FORET (FR); BONNEL, Daniel, F-80000 AMIENS (FR); TERMENON, Norberto, F-80000 AMIENS (FR)
(74) Mandataire: Vignesoult, Serge L. M.
(86) Numéro de dépôt international: PCT/FR2003/002470
(87) Numéro de publication internationale: WO 2004/015307

(56) Documents cités:
- US-A- 5 975 261
- US-A1- 2003 178 275
- US-B1- 6 231 472
- US-B2- 6 354 413

## Description

La présente invention concerne un appareil d'accouplement hydrocinétique, notamment pour un véhicule automobile. Un appareil selon le préambule de la revendication indépendante / est connu du document US-B-6354413.

On connaît déjà dans l'état de la technique, par exemple des documents FR-A-2.765.939 et US-A-5.975.261, un appareil d'accouplement hydrocinétique, notamment pour véhicule automobile, du type comportant :
- un carter formé d'une première coquille qui lie en rotation un arbre menant et une roue d'impulseur ;
- une roue de turbine solidaire en rotation, par une liaison sans jeu, d'un moyeu de turbine qui est propre à être lié en rotation à un arbre mené ;
- un embrayage de verrouillage du couplage des arbres menant et mené comportant un piston, mobile axialement pour lier, de manière débrayable, une deuxième coquille du carter à l'arbre mené, en serrant au moins un disque de friction solidaire en rotation, d'une part, de la deuxième coquille de carter par l'intermédiaire d'une première pièce de liaison et, d'autre part, de l'élément d'entrée d'un dispositif d'amortissement par l'intermédiaire d'une deuxième pièce de liaison ;
du type dans lequel le dispositif d'amortissement comprend des organes élastiques à action circonférentielle interposés entre deux rondelles de guidage formant l'élément d'entrée et un voile formant l'élément de sortie et qui est solidaire en rotation de l'arbre mené, les éléments d'entrée et de sortie étant liés en rotation avec une capacité de débattement angulaire qui est limitée par des moyens de butée, et du type comportant une voie d'alimentation du carter en fluide et une voie d'évacuation du fluide.

Ces appareils d'accouplement hydrocinétique sont du type à « trois voies », c'est à dire que le circuit hydraulique de chaque appareil comprend une première voie pour l'alimentation en fluide du convertisseur, une seconde voie d'évacuation, et une troisième voie, indépendante des première et seconde voies du convertisseur, qui permet d'alimenter la chambre de commande du piston de l'embrayage de verrouillage, en vue de déplacer axialement le piston.

Généralement, la voie d'alimentation amène le fluide dans le convertisseur, entre la roue d'impulseur et la roue de turbine, puis le fluide est évacué du convertisseur par l'extérieur, en passant dans l'espace radial entre la roue de turbine et la deuxième coquille du carter.

Le fluide circule ensuite radialement vers l'intérieur, dans l'espace axial entre la turbine et la deuxième coquille, pour être évacué par la voie d'évacuation, qui est par exemple agencée entre l'arbre mené et un manchon de réaction portant une roue de réaction centrale.

En se dirigeant vers la voie d'évacuation, le fluide traverse radialement l'embrayage de verrouillage, qui comporte des ouvertures radiales à cet effet, et il circule radialement et axialement à l'intérieur du dispositif d'amortissement.

Lorsque l'embrayage est verrouillé et lorsqu'il est dans une phase de glissement, c'est à dire lorsque le piston est commandé dans le sens de son engagement contre les disques de friction, il est nécessaire, pour le refroidissement de l'embrayage, que la plus grande quantité possible du fluide traverse l'embrayage.

Cependant, on a constaté qu'une quantité importante du fluide passe dans l'espace axial entre l'embrayage et la roue de turbine, en traversant le dispositif d'amortissement, sans traverser l'embrayage, ce qui est pénalisant pour le refroidissement de l'embrayage.

Ce phénomène est d'autant plus présent que, pendant le fonctionnement de l'appareil d'accouplement, sous la pression du fluide, le carter se déforme en « gonflant », ce qui augmente la taille de l'espace axial entre l'embrayage et la roue de turbine.

L'invention vise notamment à remédier à cet inconvénient, en proposant une solution simple et économique.

Dans ce but, l'invention propose un appareil d'accouplement hydrocinétique, notamment pour un véhicule automobile, du type comportant :
- un carter formé d'une première coquille qui lie en rotation un arbre menant et une roue d'impulseur ;
- une roue de turbine solidaire en rotation, par une liaison sans jeu, d'un moyeu de turbine qui est propre à être lié en rotation à un arbre mené ;
- un embrayage de verrouillage du couplage des arbres menant et mené comportant un piston, mobile axialement pour lier, de manière débrayable, une deuxième coquille du carter à l'arbre mené, en serrant au moins un disque de friction solidaire en rotation, d'une part, de la deuxième coquille de carter par l'intermédiaire d'une première pièce de liaison et, d'autre part, de l'élément d'entrée d'un dispositif d'amortissement par l'intermédiaire d'une deuxième pièce de liaison ;
du type dans lequel le dispositif d'amortissement comprend des organes élastiques à action circonférentielle interposés entre deux rondelles de guidage formant l'élément d'entrée et un voile formant l'élément de sortie et qui est solidaire en rotation de l'arbre mené, les éléments d'entrée et de sortie étant liés en rotation avec une capacité de débattement angulaire qui est limitée par des moyens de butée, et du type comportant une voie d'alimentation du carter en fluide et une voie d'évacuation du fluide,
le dispositif d'amortissement comportant des moyens pour restreindre la circulation du fluide dans une direction globalement radiale, au moins à l'intérieur de l'espace axial avant, qui est situé entre la rondelle' avant de guidage et le voile, de manière à favoriser la circulation du fluide, de la voie d'alimentation vers la voie d'évacuation, à travers l'embrayage de verrouillage, dans lequel lesdits
moyens pour restreindre la circulation du fluide comportent au moins une rondelle élastique avant à effet axial qui est interposée axialement entre le voile et la rondelle avant de guidage, de manière à former une barrière à l'encontre de la circulation radiale du fluide à l'intérieur de l'espace axial avant du dispositif d'amortissement, et/ou
au moins une rondelle élastique arrière à effet axial qui est interposée axialement entre le voile et une surface radiale en vis-à-vis vers l'arrière, et qui est disposée radialement à l'intérieur, par rapport aux organes élastiques, de manière à former une barrière à l'encontre de la circulation radiale du fluide à l'intérieur de l'espace axial arrière, situé entre le voile et la rondelle arrière de guidage ; Selon d'autres caractéristiques de l'invention:
- chaque rondelle élastique est une rondelle tronconique ;
- la rondelle élastique est centrée par rapport à l'axe au moyen d'un profil complémentaire de centrage qui est réalisé dans la rondelle de guidage associée, ou dans le voile ;
- le profil de centrage comporte plusieurs frappes formant, sur la rondelle de guidage associée ou sur le voile, des reliefs de centrage répartis angulairement ;
- la rondelle arrière de guidage est solidaire à rotation du moyeu de turbine;
- la rondelle arrière de guidage et le moyeu de turbine sont solidaires à rotation par engrènement, au moyen de dents qui sont portées respectivement par la périphérie intérieure de la rondelle arrière de guidage et par la périphérie extérieure du moyeu de turbine ;
- le moyeu de turbine comporte une surface radiale annulaire continue qui vient en appui axial contre la face arrière du voile, de manière à empêcher la circulation radiale du fluide à l'intérieur de l'espace axial arrière ;
- la rondelle élastique arrière est interposée axialement entre le voile et la face avant du moyeu de turbine ;
- la surface du moyeu de turbine susceptible d'être en contact avec la rondelle élastique arrière, et/ou la rondelle élastique, est traitée en vue d'augmenter sa dureté ;
- la partie centrale de la rondelle avant de guidage, et/ou la partie centrale de la rondelle arrière de guidage, qui est située au droit des organes élastiques, est pleine, grâce à quoi le fluide ne peut circuler dans l'espace axial associé en traversant la partie centrale de la rondelle de guidage ;
- le dispositif d'amortissement comporte des paires de coupelles qui sont agencées dans les parties centrales des rondelles de guidage de manière à former des surfaces d'appui pour les organes élastiques à action circonférentielle ;
- chaque rondelle de guidage comporte un bord périphérique extérieur continu, et les deux bords extérieurs sont adjacents, de manière à fermer la périphérie externe du dispositif d'amortissement ;
- le bord périphérique extérieur d'une des rondelles de guidage se prolonge axialement vers l'arrière par un déflecteur qui dévie le flux d'huile vers l'embrayage ;
- le déflecteur forme une jupe axiale, qui minimise l'espace axial entre la périphérie externe du dispositif d'amortissement et la roue de turbine ;
- le déflecteur est formé par une extension radiale extérieure de la rondelle arrière de guidage en une seule pièce ;
- la rondelle avant de guidage et le voile comportent chacun des perçages axiaux, qui sont agencés globalement axialement en vis-à-vis, en vue de faciliter la circulation du flux d'huile, qui a traversé l'embrayage, vers la voie d'évacuation ;
- le moyeu de turbine comporte des passages axiaux, au voisinage dans sa périphérie interne, en vue de faciliter la circulation du flux d'huile, qui a traversé l'embrayage, vers la voie d'évacuation
- les passages axiaux sont réalisés sous la forme de gorges axiales.

D'autres caractéristiques et avantages de l'invention apparaîtront à la lecture de la description détaillée qui suit pour la compréhension de laquelle on se reportera aux dessins annexés parmi lesquels:
- la figure 1 est une demi-vue en coupe axiale qui représente un appareil d'accouplement hydrocinétique selon un premier mode de réalisation de l'invention qui comprend deux rondelles élastiques d'étanchéité et dans lequel la rondelle élastique arrière est interposée entre le voile et la rondelle de guidage arrière de l'amortisseur ;
- la figure 2 est vue de face qui représente l'amortisseur de la figure 1 ;
- la figure 3 est une vue similaire à celle de la figure 1 qui représente un deuxième mode de réalisation de l'invention dans lequel la rondelle élastique arrière est interposée entre le voile et le moyeu de turbine du convertisseur ;
- la figure 4 est une vue similaire à celle de la figure 1 qui représente un troisième mode de réalisation de l'invention comportant une seule rondelle élastique d'étanchéité ;
- la figure 5 est une vue similaire à celle de la figure 1 qui représente un quatrième mode de réalisation de l'invention dans lequel les rondelles de guidage sont pleines ;
- la figure 6 est une vue arrière qui représente l'amortisseur de la figure 5 sans sa rondelle arrière de guidage ;
- la figure 7 est une vue en perspective éclatée qui représente l'amortisseur de la figure 5 ;
- la figure 8 est une vue similaire à celle de la figure 1 qui représente un cinquième mode de réalisation de l'invention dans lequel l'amortisseur est équipé d'un déflecteur ;
- la figure 9 est une vue similaire à celle de la figure 1 qui représente un mode de réalisation des moyens de butée axiale en forme de rebord porté par le moyeu de sortie de l'appareil d'accouplement ;
- la figure 10 est une vue similaire à celle de la figure 1 qui représente un mode de réalisation des moyens de butée axiale utilisant le flasque radial arrière d'une butée à aiguille ;
- la figure 11 est une vue similaire à celle de la figure 1 qui représente un mode de réalisation des moyens de butée axiale utilisant une bague et un flasque radial.

Dans la description qui suit, des composants identiques, similaires, ou analogues seront désignés par les mêmes chiffres de référence.

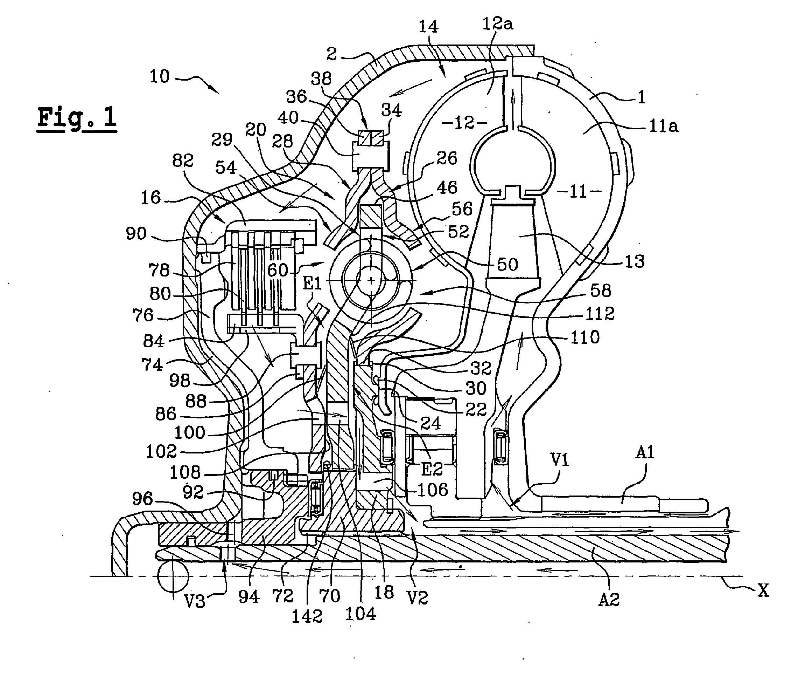

Afin de faciliter la compréhension de la description et des revendications, on utilisera, à titre non limitatif, des orientations « avant » et « arrière » correspondant respectivement à la gauche et à la droite de la figure 1 et des figures analogues, et les orientations « axiale - radiale » et « extérieur - intérieure par rapport à l'axe de rotation X-X de l'appareil d'accouplement hydrocinétique.

Comme cela est connu de l'état de la technique, un appareil d'accouplement hydrocinétique 10 tel qu'illustré à la figure 1 comporte, agencés dans un même carter étanche, en deux parties en forme de coquille respectivement avant 2 et arrière 1, rempli d'un fluide tel que de l'huile, un convertisseur de couple 14 et un embrayage de verrouillage 16.

Les coquilles 1, 2 sont de préférence assemblées par soudage.

Le convertisseur de couple 14 comporte une roue d'impulseur arrière 11, une roue de turbine avant 12 et une roue de réaction centrale 13.

La roue d'impulseur 11 comporte des aubes 11 a qui sont portées par la coquille arrière 1 qui est solidaire, de manière étanche de la coquille avant 2 d'entraînement. La coquille 1 est propre à être liée en rotation à un arbre menant A1.

La roue de turbine 12 comporte aussi des aubes 12a qui font face aux aubes 11 a de la roue d'impulseur 11, et la roue de turbine 12 est liée en rotation à un moyeu de turbine 18 qui est apte à être lié en rotation à un arbre mené A2, coaxial à l'axe X-X de l'appareil 10, par l'intermédiaire ici d'un dispositif d'amortissement 20.

Dans le cas d'une application à un véhicule automobile, l'arbre menant A1 est constitué par le vilebrequin du moteur à combustion interne du véhicule, tandis que l'arbre mené A2 est constitué par l'arbre d'entrée de la transmission du véhicule, relié à des moyens de changement de rapport de vitesse.

La roue de turbine 12 est ici solidaire en rotation, par une liaison sans jeu, du moyeu de turbine 18. La liaison entre la roue de turbine 12 et le moyeu de turbine 18 est ici réalisée par soudage à friction, entre une surface radiale avant 22 de la périphérie interne de la roue de turbine 12 et une surface radiale arrière 24 du moyeu de turbine 18, axialement en vis-à-vis.

Bien entendu, la liaison entre la roue de turbine 12 et le moyeu de turbine 18 peut être réalisée aussi par d'autres moyens, par exemple par rivetage ou par sertissage.

Le moyeu de turbine 18 est prévu pour être lié en rotation à l'arbre mené A2 par l'intermédiaire du dispositif d'amortissement 20, ou amortisseur, qui comprend un élément d'entrée 26, 28 et un élément de sortie 29.

L'élément d'entrée de l'amortisseur 20 est ici constitué par des rondelles de guidage 26, 28 dont l'une, dite rondelle arrière de guidage 26, est liée en rotation sans jeu par engrènement avec le moyeu de turbine 18.

A cet effet, le bord périphérique externe du moyeu de turbine 18 comporte des dents 30 qui s'étendent radialement vers l'extérieur, et qui sont prévues pour coopérer avec des dents 32 complémentaires portées par le bord périphérique interne de la rondelle arrière de guidage 26.

On note que l'épaisseur axiale des dents 30 du moyeu de turbine 18 est plus importante que l'épaisseur axiale des dents 32 de la rondelle arrière de guidage 26, de sorte que la rondelle arrière de guidage 26 dispose d'une liberté axiale pour se déplacer vers l'avant ou vers l'arrière, tout en gardant un contact par engrènement entre ses dents 32 et les dents 30 du moyeu de turbine 18.

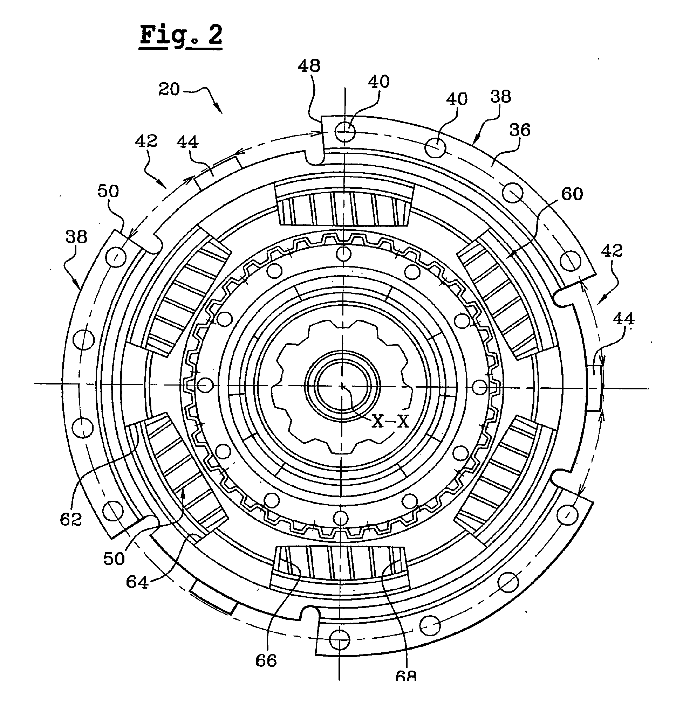

Les rondelles de guidage 26, 28 sont solidaires à rotation l'une de l'autre par leurs bords périphériques extérieurs 34, 36, qui comportent des secteurs angulaires 38 adjacents, répartis régulièrement autour de l'axe X-X, comme on peut le voir sur la figure 2.

Les secteurs angulaires adjacents 38 sont accolés par leurs faces radiales en vis-à-vis, ici au moyen de rivets 40.

Les secteurs angulaires accolés 38 délimitent circonférentiellement entre eux des encoches 42 de guidage et de butée, qui sont prévues chacune pour permettre le débattement angulaire d'une patte radiale 44 associée, formée dans le prolongement radial du bord périphérique extérieur 46 d'un voile 29 formant l'élément de sortie de l'amortisseur 20.

Chaque encoche 42 comporte deux bords radiaux 48, 50 opposés circonférentiellement, qui forment des surfaces de butée pour la patte radiale 44 associée.

La venue en butée des pattes radiales 44 contre les surfaces de butée 48, 50 détermine donc une position angulaire relative de butée entre les rondelles de guidage 26, 28 et le voile 29.

Ainsi, le couple transmis par la roue de turbine 12 au moyeu de turbine 18 est transmis aux rondelles de guidage 26, 28, formant l'élément d'entrée de l'amortisseur 20, puis au voile 29, formant l'élément de sortie de l'amortisseur 20, par l'intermédiaire d'organes élastiques à action circonférentielle 50, après un débattement angulaire des rondelles de guidage 26, 28 jusqu'à leur position angulaire de butée avec le voile 29.

Les organes élastiques 50 à action circonférentielle sont interposés entre les rondelles de guidage 26, 28 et le voile 29. Pour ce faire, le voile 29 comporte des fenêtres 52 dans lesquelles sont montés les organes élastiques 50.

Les rondelles de guidage 26, 28 comprennent aussi chacune une partie centrale de guidage 54, 56 qui est munie de fenêtres 58, 60 agencées au droit des fenêtres 52 du voile 29.

Les organes élastiques 50 sont en appui respectivement sur les bords radiaux 62, 64 des fenêtres 58, 60 des rondelles de guidage 26, 28 et sur les bords radiaux 66, 68 des fenêtres 52 du voile 29. Les organes élastiques 50 sont maintenus axialement par les bords d'orientation circonférentielle des fenêtres 58, 60 des rondelles de guidage 26, 28.

Les organes élastiques 50 sont ainsi sollicités circonférentiellement entre les éléments d'entrée 26, 28 et de sortie 29 de l'amortisseur 20, dans la mesure d'un débattement angulaire relatif déterminé par le déplacement circonférentiel des pattes radiales 44 du voile 29 dans les encoches 42 des rondelles de guidage 26, 28, jusqu'à une position angulaire de butée.

Le voile 29 est solidaire en rotation, par engrènement sans jeu, avec un moyeu de sortie 70 qui est lié en rotation, ici par l'intermédiaire de cannelures 72, avec l'arbre mené A2.

Bien entendu, selon une variante de réalisation (non représentée), le voile 29, formant l'élément de sortie de l'amortisseur 20, peut être réalisé en une seule pièce avec le moyeu de sortie 70.

L'appareil 10 comporte, à-l'avant, une chambre étanche 74, qui est délimitée axialement par la coquille avant 2 du carter et par un piston 76. Le piston 76 est mobile axialement de manière à pouvoir venir serrer axialement, sous l'action de la pression de l'huile dans la chambre 74, l'embrayage 16, ici de type multi-disques.

Comme on l'a représenté sur la figure 1, un tel embrayage 16 comporte une pluralité de flasques 78 et des disques de friction 80, interposés axialement entre deux flasques 78 successifs, chaque disque de friction 80 étant pourvu sur ses faces avant et arrière de garnitures de friction.

Les flasques 78 comportent, à leur périphérie radiale extérieure, une denture ou tout autre moyen propre à lier en rotation par coopération de formes les flasques 78 à une première pièce de liaison 82. La première pièce de liaison 82 est solidaire en rotation de la coquille 2 sur laquelle elle est par exemple rapportée par soudage.

Les disques 80 comportent, de manière analogue aux flasques 78, des moyens d'engrènement, à leur périphérie radiale intérieure, qui assurent la liaison en rotation avec une deuxième pièce de liaison 84, qui est solidaire en rotation de l'entrée de l'amortisseur 20, par exemple de la rondelle avant de guidage 28.

La deuxième pièce de liaison 84 comporte ici une portion radiale 86, à son extrémité axiale arrière, qui est fixée sur la face avant de la rondelle avant de guidage 28 par l'intermédiaire de rivets 88.

En variante, la deuxième pièce de liaison 84 peut être fixée sur la rondelle avant de guidage 28 par d'autres moyens, notamment par soudage à friction.

Le piston 76 comporte, à sa périphérie radiale extérieure, une gorge annulaire dans laquelle sont montés des premiers moyens d'étanchéité dynamique, tels qu'un segment 90, qui coopère avec une surface axiale en vis-à-vis de la première pièce de liaison 82 et, à sa périphérie radiale intérieure, une surface propre à coopérer avec des seconds moyens d'étanchéité dynamique, tels qu'un segment 92, qui est monté dans une gorge annulaire d'un moyeu, ou centreur 94, qu'entoure le piston 76, avec lequel il est lié en rotation par engrènement.

Les moyens d'étanchéité dynamique 90, 92 délimitent ainsi la chambre 74, qui est alimentée en huile par un arbre creux, ici l'arbre mené A2, des passages radiaux 96 adaptés étant prévus dans le centreur 94.

On note que l'appareil 10 est ici du type « trois voies », c'est à dire qu'il comprend une première voie V1 d'alimentation du circuit hydraulique du convertisseur 14 et une seconde voie V2 de sortie, et une troisième voie d'alimentation V3 de la chambre 74 pour déplacer axialement le piston 76, cette troisième voie V3 étant indépendante des première V1 et seconde V2 voies du convertisseur 14.

On expliquera maintenant le fonctionnement classique d'un tel appareil d'accouplement hydrocinétique 10.

Dans une première phase de fonctionnement, dite « phase convertisseur », le couple de l'arbre menant A1 est transmis à la roue d'impulseur 11 qui entraîne, par circulation d'huile entre les aubes 11a et 12a, la roue de turbine 12.

Durant la phase convertisseur, l'amortisseur 20 n'intervient pratiquement pas dans l'amortissement des vibrations ou oscillations de torsion issues notamment des acyclismes du moteur. En effet, les vibrations ou oscillations de torsion sont filtrées principalement dans l'huile par le convertisseur 14, puisque la transmission du couple moteur est réalisée par l'intermédiaire de l'énergie cinétique de l'huile dans le convertisseur 14, l'amortisseur 20 se contentant de transmettre le couple de la roue de turbine 12 au moyeu de sortie 70.

Dans une seconde phase, dite « phase de couplage », on alimente la chambre étanche 74 du carter 1, 2, de manière que le piston 76 exerce une pression axiale vers l'arrière, contre l'embrayage 16, sous l'action de la pression de l'huile dans la chambre 74, pour coupler les arbres menant A1 et mené A2.

L'embrayage 16 est généralement activé après le démarrage du véhicule et après le couplage hydraulique des arbres menant A1 et mené A2, pour éviter la perte de rendement induite notamment par des phénomènes de glissement entre les roues de turbine 12 et d'impulseur 11.

A l'état embrayé, c'est à dire lorsque le piston 76 vient serrer les disques de friction 80 par l'intermédiaire de l'embrayage multi-disques 16, le couple de l'arbre menant A1 est transmis d'abord aux rondelles de guidage 26, 28, puis au voile 29, par l'intermédiaire des organes élastiques 50.

Les organes élastiques 50 amortissent les oscillations de torsion puis, après débattement angulaire de la liaison à jeu entre les rondelles de guidage 26, 28 et le voile 29 de l'amortisseur 20, le couple est transmis au voile 29, qui est lié à rotation à l'arbre mené A2, par l'intermédiaire du moyeu 70.

Pour plus de détails quant à la réalisation et au fonctionnement d'un tel appareil d'accouplement hydrocinétique 10, on se reportera à l'un ou l'autre des documents FR-A-2.765.939 et US-A-5.975.261.

On décrira maintenant les différentes modes de réalisation de l'invention, en décrivant principalement les différences qui distinguent chaque mode de réalisation par rapport à un autre.

Conformément aux enseignements de l'invention, l'appareil 10 comporte des moyens pour restreindre la circulation de l'huile dans une direction globalement radiale, au moins à l'intérieur de l'espace axial avant E1, qui est situé entre la rondelle avant de guidage 28 et le voile 29, de manière à favoriser la circulation de l'huile, de la voie d'alimentation V1 vers la voie d'évacuation V2, à travers l'embrayage de verrouillage 16.

De manière classique, l'embrayage de verrouillage 16 comporte à cet effet des perçages radiaux 98, qui sont réalisés dans la première 82 et dans la deuxième 84 pièces de liaison, de manière à permettre la circulation radiale de l'huile à travers l'embrayage 16,- entre les flasques 78 et les disques de friction 80.

La circulation de l'huile à travers l'embrayage 16 permet de refroidir l'embrayage 16, en particulier lorsque l'embrayage 16 est engagé, ou semi-engagé, et qu'il se produit un glissement entre les flasques 78 et les disques de friction 80, produisant un échauffement.

Conformément à un premier mode de réalisation de l'invention, qui est représenté sur la figure 1, l'amortisseur 20 comporte une rondelle élastique avant 100, à effet axial, qui est interposée axialement entre la rondelle avant de guidage 28 et le voile 29.

Cette rondelle élastique 100 est ici une rondelle tronconique qui est en appui axial sensiblement continu, circonférentiellement, sur chaque face en vis-à-vis, respectivement de la rondelle avant de guidage 28 et du voile 29.

Avantageusement, la rondelle élastique avant 100 est disposée radialement à l'intérieur, par rapport aux organes élastiques 50.

La rondelle élastique avant 100 forme ainsi une barrière sensiblement étanche, qui empêche la circulation de l'huile radialement vers l'intérieur, dans l'espace axial avant E1.

En effet, le flux d'huile, provenant de la voie d'alimentation V1, qui circule entre la coquille avant 2 et l'amortisseur 20, pénètre dans l'espace axial avant E1 en passant par les fenêtres 60, ou en passant par les encoches 42. Ce flux d'huile se trouve bloqué par la rondelle élastique avant 100, qui l'empêche de se diriger vers la voie d'évacuation V2. Par conséquent, la majorité du flux d'huile va emprunter un chemin plus facile, qui passe par l'embrayage 16.

Le « blocage » de l'huile dans l'espace axial avant E1 provoque donc une augmentation du débit d'huile à travers l'embrayage 16, ce qui améliore le refroidissement de l'embrayage 16.

Selon le mode de réalisation représenté ici, la rondelle avant de guidage 28 se prolonge radialement vers l'intérieur, globalement jusqu'au moyeu de sortie 70.

Pour favoriser l'écoulement de l'huile, qui traverse l'embrayage 16, vers la voie d'évacuation V2, on prévoit avantageusement une série de perçages axiaux 102, 104, 106 respectivement dans la rondelle avant de guidage 28, dans le voile 29, et dans le moyeu de turbine 18.

Les perçages axiaux 102, 104, 106 de chaque série sont par exemple répartis angulairement de manière régulière.

Les perçages axiaux 102 de la rondelle avant de guidage 28 sont disposés radialement à l'intérieur, par rapport à la rondelle élastique avant 100.

Le moyeu de turbine 18 comporte ici des rainures qui s'étendent radialement dans sa face avant et qui permettent le « raccordement » entre les perçages axiaux 104 du voile 29 et les perçages axiaux 106, ces derniers étant déportés radialement vers l'intérieur, par rapport aux perçages axiaux 104.

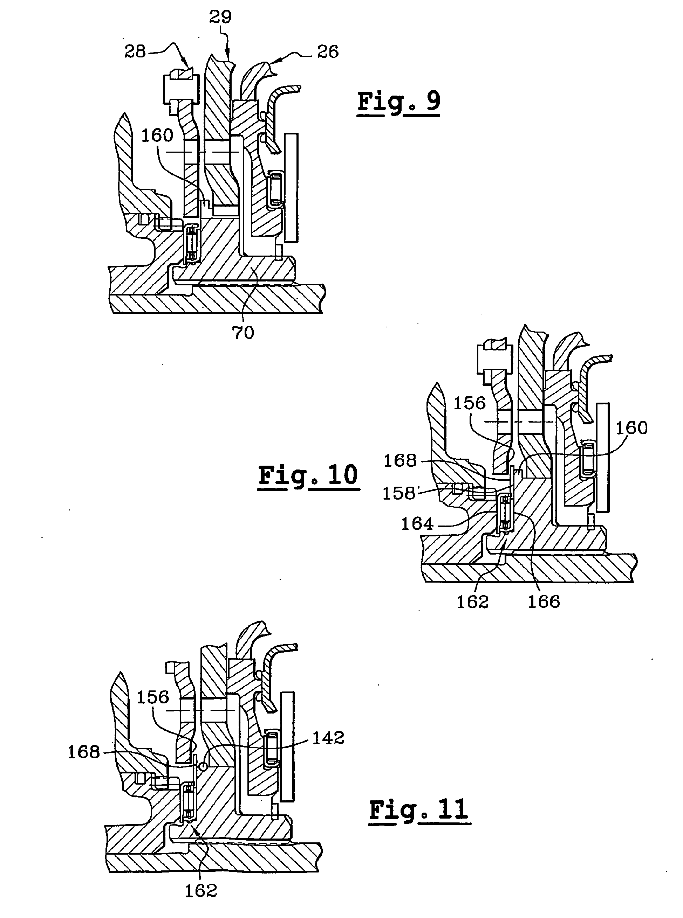

Selon une variante de réalisation, qui est représentée sur les figures 9 à 11, les passages axiaux 106 peuvent être réalisés sous la forme de gorges axiales, qui sont réalisées dans la périphérie interne du moyeu de turbine 18. Ces gorges axiales sont par exemple réparties angulairement de manière régulière.

De telles gorges peuvent être réalisées facilement par usinage, ce qui diminue les coûts de fabrication du moyeu de turbine 18.

Avantageusement, la rondelle avant de guidage 28 comporte un bossage annulaire 108 convexe vers l'arrière, qui peut être réalisé par emboutissage, et qui permet le centrage de la rondelle élastique avant 100.

Bien entendu, selon une variante de réalisation, le bossage de centrage 108 peut être interrompu circonférentiellement, de manière à former des secteurs de centrage répartis angulairement.

De préférence, selon le premier mode de réalisation, le dispositif d'amortissement 20 comporte une rondelle élastique arrière 110, du même type que la rondelle élastique avant 100, qui est interposée axialement, dans l'espace axial arrière E2, entre le voile 29 et la rondelle arrière de guidage 26.

La rondelle élastique arrière 110 est agencée ici radialement entre les organes élastiques 50 et les dents 32 de la rondelle arrière de guidage 26.

La rondelle élastique arrière 110 est ici centrée sur le voile 29 au moyen d'un décrochement axial 112 formé dans le voile 29.

De la même manière que la rondelle élastique avant 100, la rondelle élastique arrière 110 forme une barrière à l'encontre du flux d'huile, qui provient de la voie d'alimentation V1, et qui circule entre l'amortisseur 20 et la roue de turbine 12.

Grâce aux deux rondelles élastiques 100, 110, globalement, le seul chemin possible pour l'huile, entre la voie d'alimentation V1 et la voie d'évacuation V2, passe par l'embrayage 16, ce qui assure la circulation d'une grande quantité d'huile à travers l'embrayage 16, et donc un bon refroidissement de l'embrayage 16.

La circulation de l'huile dans l'appareil 10 est illustrée, sur la figure 1, par des flèches.

On note que l'invention s'applique aussi à un appareil 10 dans lequel le sens de circulation de l'huile est inversé par rapport à celui qui est représenté ici.

On note que les rondelles élastiques 100, 110 contribuent à l'amortissement des oscillations de torsion dans l'appareil 10, puisqu'elles forment des éléments de frottement entre les rondelles de guidage 26, 28 et le voile 29.

De plus, les rondelles élastiques 100, 110 participent au positionnement axial des éléments de l'amortisseur 20 dans l'appareil 10, en compensant les jeux axiaux.

Comme les rondelles 100, 110 sont élastiques, l'étanchéité est maintenue, même en cas de déplacement axial du voile 29 par rapport aux rondelles de guidage 26, 28.

Pour améliorer leur dureté, les rondelles élastiques 100, 110 peuvent être traitées, par exemple par carbonitruration.

De préférence, les bords des rondelles élastiques 100, 110, qui sont en contact avec la rondelle de guidage 26, 28 associée ou avec le voile 29, sont arrondis, de manière à éviter une détérioration des surfaces en contact.

On note que, dans le premier mode de réalisation, un flux d'huile peut circuler dans l'espace axial arrière E2, en passant entre les dents 30 du moyeu de turbine 18 et les dents 32 de la rondelle arrière de guidage 26. Ce flux d'huile est faible, puisque la rondelle arrière de guidage 26 engrène sans jeu sur le moyeu de turbine 18, et parce que le flux d'huile dépend uniquement du jeu radial entre les dents 30, 32. En effet, le déplacement axial de la rondelle arrière de guidage 26, par rapport au moyeu de turbine 18, ne modifie pas la section de passage de l'huile entre les deux éléments 18, 26, contrairement à un appareil 10 dans lequel les dents du moyeu de turbine 18 forment des pavés, qui s'étendent axialement vers l'avant, à partir de la surface radiale avant du moyeu de turbine 18, tel que les appareils représentés dans les documents FR-A-2.765.939 et US-A-5.975.261.

Dans ces documents, on constate que, plus le déplacement axial de la rondelle arrière de guidage 26 vers l'avant est important, plus l'espace axial, qui est créé entre la surface radiale arrière de la rondelle arrière de guidage 26 et la surface radiale avant du moyeu de turbine 18, est important. La section de passage de l'huile entre la rondelle arrière de guidage 26 et le moyeu de turbine 18 dépend donc du jeu axial entre ces deux éléments.

Un autre avantage du montage de la rondelle arrière de guidage 26 sur le moyeu de turbine 18 par leurs périphéries respectivement interne et externe, réside dans un encombrement axial moindre.

Ce montage permet aussi de diminuer les coûts de production, notamment parce qu'il est plus facile de réaliser par usinage des dents radiales 30, 32, à la périphérie externe et interne, respectivement du moyeu de turbine 18 et de la rondelle arrière de guidage 26, que de réaliser des dents qui s'étendent axialement vers l'avant, comme dans les documents cités ci-dessus.

Le mode de réalisation avantageux de l'engrènement de la rondelle arrière de guidage 26 sur le moyeu de turbine 18, qui vient d'être décrit, peut être utilisé dans d'autres configurations d'appareils d'accouplement hydrocinétique 10, en particulier dans un appareil 10 qui ne comporte pas de moyens pour restreindre le flux d'huile dans l'amortisseur 20.

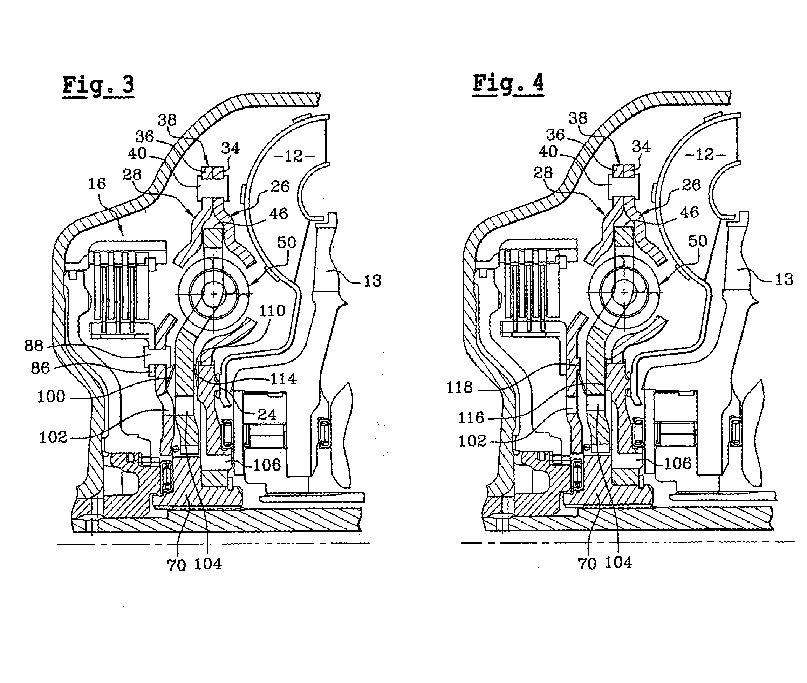

En vue d'améliorer « l'étanchéité » de l'amortisseur 20, dans l'espace axial arrière E2, un deuxième mode de réalisation, qui est représenté sur la figure 3, prévoit d'interposer axialement la rondelle élastique arrière 110 entre le voile 29 et une surface radiale avant 114 du moyeu de turbine 18.

La face avant du moyeu de turbine 18 comporte ici un lamage dans lequel la rondelle élastique arrière 110 est centrée par sa périphérie radiale interne.

De préférence, la face avant du moyeu de turbine 18, sur laquelle prend appui la rondelle élastique arrière 110, est traitée par exemple par carbo-nitruration, de manière à augmenter sa dureté. Ce traitement peut être réalisé, par exemple, en même temps que le traitement des dents 30.

Sur la figure 4, on a représenté un troisième mode de réalisation, dans lequel l'amortisseur 20 comporte une seule rondelle élastique 100, dans l'espace axial avant E1, et dans lequel le moyeu de turbine 18 comporte une surface radiale annulaire continue 116, qui est prévue pour être en appui axial vers l'avant contre la face arrière du voile 29.

La surface radiale annulaire 116 du moyeu de turbine 18 étant en appui axial continu contre le voile 29, cela empêche la circulation radiale de l'huile vers l'intérieur, dans l'espace axial arrière E2.

Le mode de réalisation représenté ici est muni d'une variante de réalisation des moyens de centrage de la rondelle élastique avant 100.

Selon cette variante, la rondelle avant de guidage 28 comporte plusieurs « frappes », qui forment sur la face arrière de la rondelle 28 des reliefs de centrage 118, qui sont répartis angulairement, de préférence de manière régulière.

Les reliefs de centrage 118 sont par exemple intercalés circonférentiellement entre deux rivets 88 de fixation de la deuxième pièce de liaison 84.

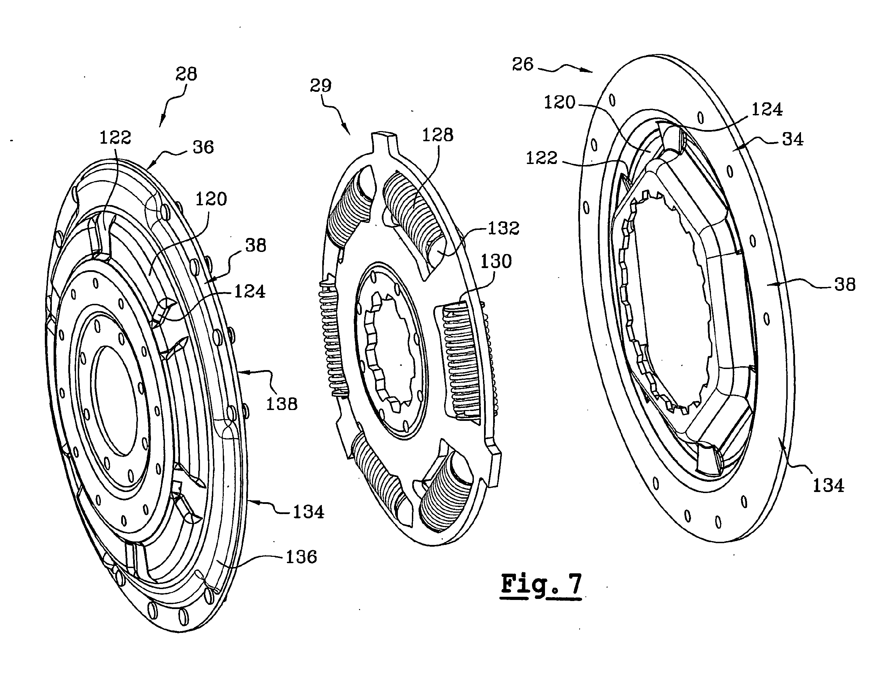

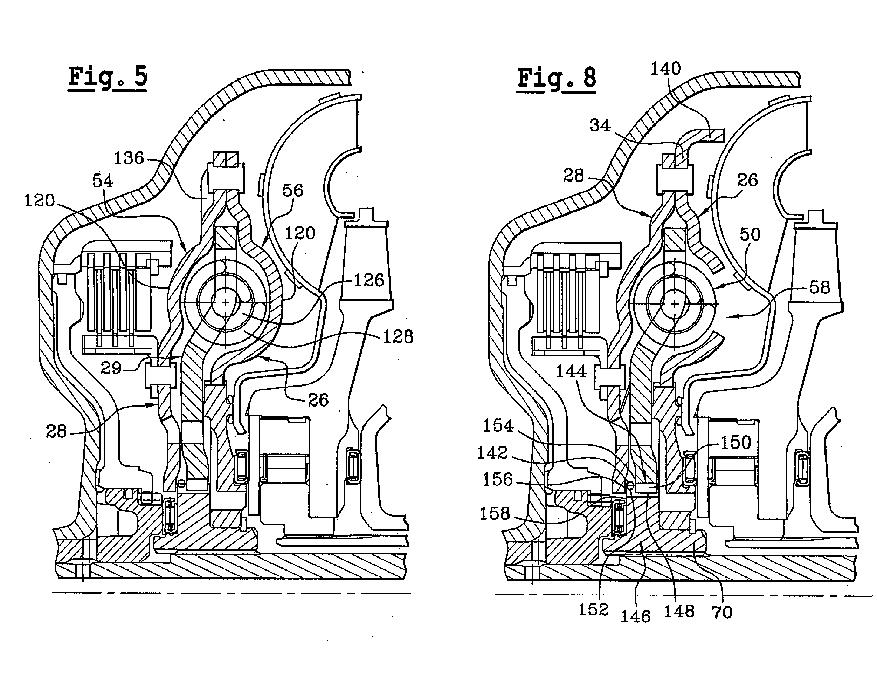

Sur les figures 5 à 7, on a représenté un quatrième mode de réalisation de l'invention, dans lequel l'amortisseur 20 est entièrement « fermé », et il est dépourvu de rondelle élastique 100, 110.

Selon ce mode de réalisation, la partie centrale de guidage 54, 56 de chaque rondelle de guidage 26, 28 est pleine, c'est à dire qu'elle est dépourvue de fenêtre 58, 60.

La partie centrale de guidage 54, 56 de chaque rondelle de guidage 26, 28 forme donc, au droit des organes élastiques 50; des bossages complémentaires 120, à la place des fenêtres 58, 60.

Les bossages 120 délimitent, à chacune de leurs extrémités circonférentielles, une surface d'appui 122, 124 pour les organes élastiques 50, qui a globalement la même fonction que les bords radiaux 62, 64 des fenêtres 58, 60.

Selon le mode de réalisation représenté ici, de manière classique, les organes élastiques 50 comportent, dans chaque fenêtre 52 du voile 29, une paire de ressorts hélicoïdaux 126, 128 coaxiaux.

Les rondelles de guidage 26, 28 doivent donc comporter, pour chaque paire de ressorts 126, 128, deux surfaces d'appui, opposées circonférentiellement, sur lesquelles les deux ressorts 126, 128 peuvent prendre appui.

Pour des raisons de coût et de simplicité de fabrication, on souhaite pouvoir conformer les rondelles de guidage 26, 28 par emboutissage. Ce procédé de réalisation ne permet pas de déformer suffisamment la tôle constituant les rondelles de guidage 26, 28, vers le voile 29, pour permettre aux ressorts 126 de petit diamètre, ou ressorts intérieurs, agencés coaxialement dans les ressorts 128 de grand diamètre, ou ressorts extérieurs, de venir en appui circonférentiellement contre les surfaces d'appui 122, 124.

Par conséquent, dans ce mode de réalisation, on prévoit, pour chaque paire de ressorts 126, 128, deux coupelles 130, 132 qui viennent en appui contre les surfaces d'appui 122, 124 des bossages 120, et qui forment elles-mêmes des surfaces d'appui pour les ressorts 126, 128.

Selon une variante de réalisation (non représentée) de l'invention, il est possible d'utiliser des ressorts extérieurs 128 réalisés en fil de faible diamètre, de sorte que les ressorts intérieurs puissent avoir des spires de diamètre suffisant pour venir en appui sur les surfaces d'appui 122, 124, sans qu'il ne soit nécessaire de prévoir des coupelles 130, 132.

Avantageusement, selon le quatrième mode de réalisation, le bord périphérique extérieur 34, 36 de chaque rondelle de guidage 26, 28 est continu et adjacent au bord périphérique extérieur 34, 36 en vis-à-vis, de manière à « fermer » l'amortisseur 20 à sa périphérie extérieure.

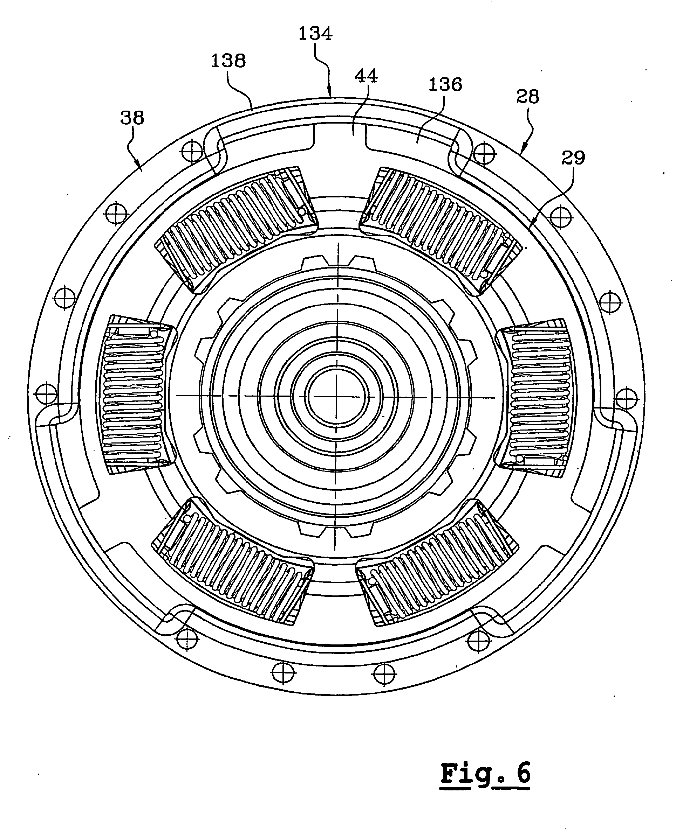

En comparant la vue de la figure 6 et la vue de la figure 2, on constate donc que les rondelles de guidage 26, 28 ne comportent plus de découpes formant des encoches circonférentielles 42.

Le bord périphérique extérieur 34, 36 de chaque rondelle de guidage 26, 28 comporte des secteurs angulaires 38 qui sont rivetés aux secteurs angulaires 38 en vis-à-vis.

Selon le mode de réalisation représenté ici, la rondelle avant de guidage 28 comporte des secteurs angulaires 134, qui sont intercalés entre deux secteurs angulaires rivetés 38, et qui forment chacun un bossage 136, convexe vers l'avant, délimitant un espace axial, entre les deux rondelles de guidage 26, 28, pour permettre le débattement angulaire de la patte radiale 44 associée du voile 29. Les bossages 136 remplacent les encoches circonférentielles 42.

Chaque bossage 136 est délimité radialement vers l'extérieur par un bord circonférentiel 138, qui vient en appui axial contre la face avant du bord périphérique extérieur 34 en vis-à-vis de la rondelle arrière de guidage 26.

Le bord périphérique extérieur 34 de la rondelle arrière de guidage 26 est ici sensiblement plat sur toute sa circonférence, c'est à dire que les secteurs angulaires 134 intercalés entre deux secteurs angulaires rivetés 38 ne comportent pas de bossage, en vis-à-vis des bossages 136 de la rondelle avant de guidage 28.

Ainsi, la réalisation des rondelles de guidage 26, 28 s'en trouve facilitée. En effet, on ne réalise les bossages 136 que dans la rondelle avant 28, de sorte que, compte tenu des tolérances de fabrication, notamment à l'emboutissage, il est plus facile de s'assurer d'un contact sensiblement continu entre les bords périphériques extérieurs 34, 36 des deux rondelles 26, 28, et de s'assurer d'un agencement correct des bossages 136 par rapport aux pattes radiales 44 du voile 29.

Bien entendu, selon une variante de réalisation (non représentée), on peut réaliser les bossages 136 à la fois dans la rondelle avant 28 et dans la rondelle arrière 26 de guidage, de sorte que les bords périphériques extérieurs 34, 36 des deux rondelles 26, 28 soient sensiblement symétriques par rapport à un plan de symétrie transversal à l'axe X-X.

Dans le mode de réalisation représenté ici, on constate que le passage du flux d'huile, radialement de l'extérieur vers l'intérieur, à travers l'amortisseur 20, n'est pratiquement pas -possible, puisqu'il n'existe aucune ouverture permettant un écoulement facile de l'huile à travers l'amortisseur 20. L'écoulement du flux d'huile à travers l'embrayage 16 est donc favorisé, puisque celui-ci comporte des perçages radiaux à cet effet.

Selon une variante de réalisation (non représentée) de l'invention, les rondelles de guidage 26, 28 sont fermées, au droit des organes élastiques 50, comme dans le quatrième mode de réalisation, mais les bords périphériques 34, 36 des rondelles de guidage 26, 28 sont réalisés comme dans le premier mode de réalisation, c'est à dire qu'ils comportent de encoches 42 « ouvertes ».

Dans une telle variante de réalisation, on prévoit avantageusement des rondelles élastiques avant et arrière 100, 110, du même type que celles du premier mode de réalisation, qui sont interposées axialement entre le voile 29 et la rondelle de guidage 26, 28 associée, et qui sont disposées radialement à l'extérieur, par rapport aux organes élastiques 50.

Sur la figure 8, on a représenté un cinquième mode de réalisation de l'invention, qui est similaire au précédent, mais dans lequel la rondelle arrière de guidage 26 est similaire à celle du troisième mode de réalisation, qui est représenté sur la figure 4. La rondelle arrière de guidage 26 n'est donc pas pleine, mais elle comporte des fenêtres 58 au droit des organes élastiques 50.

Avantageusement, le bord périphérique extérieur 34 de la rondelle arrière de guidage 26 se prolonge axialement vers l'arrière par un déflecteur 140 en forme de jupe axiale.

Le déflecteur 140 permet de dévier le flux d'huile vers l'embrayage 16.

De préférence, le déflecteur 140 est agencé de manière à minimiser l'espace axial entre la périphérie externe de l'amortisseur 20 et la roue de turbine 12, de sorte que la majorité du flux d'huile s'écoule vers l'espace axial entre la coquille avant 2 et la périphérie externe de l'amortisseur 20, pour traverser l'embrayage 16.

Bien entendu, le déflecteur 140 peut aussi équiper un appareil 10 dans lequel les deux rondelles de guidage 26, 28 sont pleines, tel que celui qui est représenté sur les figures 5 à 7.

Dans les différents modes de réalisation de l'appareil d'accouplement hydrocinétique 10 qui sont représentés sur les figures, le moyeu de sortie 70 comporte, à l'avant, des moyens de butée axiale coopérant avec une portion de la face avant du voile 29 et avec une portion de la face arrière de la rondelle avant de guidage 28, de manière à retenir axialement le dispositif d'amortissement 20 sur le moyeu de sortie 70.

Ces moyens de butée axiale permettent, pendant le fonctionnement de l'appareil 10, de limiter le déplacement axial du voile 29, par rapport au moyeu de sortie 70, vers l'avant.

Ces moyens de butée axiale permettent aussi d'assembler le dispositif d'amortissement 20 sur le moyeu de sortie 70, avant leur montage dans l'appareil d'accouplement hydrocinétique 10, de manière à réaliser un sous-ensemble qui facilite le transport de ces éléments 20, 70 jusqu'au lieu de leur montage dans l'appareil d'accouplement hydrocinétique 10.

De plus, la formation d'un tel sous-ensemble facilite le montage du moyeu de sortie 70 et du dispositif d'amortissement 20 dans l'appareil 10.

Bien entendu, ces moyens de butée axiale sont inutiles, dans le cas où le voile 29 est réalisé en une seule pièce avec le moyeu de sortie 70.

Selon un premier mode de réalisation des moyens de butée, qui est représenté notamment sur la figure 8, le moyeu de sortie 70 comporte une bague de butée 142, ou jonc, qui est montée sur la face axiale 144 de son tronçon principal 146.

On appelle ici tronçon principal 146, le tronçon du moyeu de sortie 70 dans lequel sont formées les dents d'engrènement 148 avec les dents 150 du voile 29.

La bague de butée 142, ici de section axiale circulaire, est reçue dans une rainure périphérique 152 du tronçon principal 146, agencée au voisinage de l'extrémité axiale avant du tronçon principal 146.

Lorsque le voile 29 est monté sur le moyeu de sortie 70, le voile 29 est retenu axialement vers l'avant, puisqu'il comporte, à sa périphérie interne, une portion de surface radiale 154 en vis-à-vis axialement de la bague de butée 142.

Pendant le transport du sous-ensemble formé par l'amortisseur 20 et le moyeu de sortie 70, le voile 29 est aussi retenu axialement vers l'arrière. En effet, le voile 29 est « emprisonné » entre les deux rondelles de guidage 26, 28, et la rondelle avant de guidage 28 comporte, à sa périphérie interne, une portion de surface radiale 156 en vis-à-vis axialement de la bague de butée 142, et ici en vis-à-vis axialement du bord périphérique externe de la surface radiale avant 158 du tronçon principal 146. La portion de surface radiale 156 est donc susceptible de venir en butée axiale vers l'arrière contre la surface radiale avant 158 du tronçon principal 146.

On note que le diamètre de la périphérie interne de la rondelle avant de guidage 28 est inférieur au diamètre externe du tronçon principal 146 du moyeu de sortie 70, de manière que la portion de surface radiale 156 soit agencée en vis-à-vis axialement de la surface radiale avant 158 du tronçon principal 146.

Pendant le fonctionnement de l'appareil d'accouplement hydrocinétique 10, on constate que, vers l'arrière, le voile 29 est retenu axialement par le moyeu de turbine 18, contre lequel il vient en appui axial avant que la rondelle avant de guidage 28 vienne en appui axial contre la surface radiale avant 158 du moyeu de sortie 70.

Un deuxième mode de réalisation des moyens de butée axiale est représenté sur la figure 9. -

Selon ce deuxième mode de réalisation, la bague de butée 142 est remplacée par une extension périphérique radiale, ou rebord 160, à l'extrémité axiale avant du tronçon principal 146 du moyeu de sortie 70.

De préférence, le rebord 160 est réalisé sur le tronçon principal 146, avant les dents 148. Pour faciliter la fabrication du moyeu de sortie 70, les dents 148 sont réalisées ensuite sur toute l'épaisseur axiale du tronçon principal 146, de sorte que le rebord 160 a alors un profil, en section transversale, en forme de dents. En fait, chaque dent 148 du tronçon principal 146 comporte alors, à son extrémité axiale avant, un petit rebord extérieur 160.

Comme pour le premier mode de réalisation des moyens de butée axiale, le diamètre de la périphérie interne de la rondelle avant de guidage 28 est tel que la rondelle avant de guidage 28 présente une portion de surface radiale 156 en vis-à-vis axialement, au moins de la surface radiale avant du rebord 160.

Selon un troisième mode de réalisation, qui est représenté sur la figure 10, le tronçon principal 146 du moyeu de sortie 70 comporte un rebord 160 similaire à celui du deuxième mode de réalisation.

De manière classique, l'appareil 10 comporte généralement des moyens de roulement 162, qui sont intercalés axialement entre le centreur 94 et la surface radiale avant 158 du tronçon principal 146. Ces moyens de roulement 162 consistent ici en une butée à aiguilles comportant des éléments roulant montés entre deux flasques radiaux avant 164 et arrière 166.

Le flasque radial arrière 166 est par exemple serti sur le moyeu de sortie 70.

Selon le troisième mode de réalisation, le flasque radial arrière 166 comporte une extension radiale extérieure 168, qui est adjacente à la surface radiale avant 158 du tronçon principal 146, et qui s'étend vers l'extérieur, au-delà du rebord 160.

Ce troisième mode de réalisation permet notamment d'augmenter le diamètre de l'ouverture formée par la périphérie interne de la rondelle avant de guidage 28, puisque l'extension radiale 168 forme une surface de butée axiale, en vis-à-vis de la portion de surface radiale 156, qui s'étend plus loin vers l'extérieur que le rebord 160.

Selon le quatrième mode de réalisation des moyens de butée axiale, qui est représenté sur la figure 11, le tronçon principal 146 du moyeu de sortie 70 comporte une bague de butée 142 similaire à celle de la figure 8, et un flasque radial arrière 166 similaire à celui de la figure 10.

Bien entendu, les modes de réalisation décrits et représentés ici constituent des exemples de mises en oeuvre de l'invention.

D'autres modes de réalisation non représentés sont envisageables, sans sortir du domaine de l'invention. En particulier, les différents modes de réalisations représentés ici peuvent être combinés entre eux.

## Revendications

1. Appareil d'accouplement hydrocinétique (10), notamment pour un véhicule automobile, du type comportant :
- un carter (1, 2) formé d'une première coquille (1) qui lie en rotation un arbre menant (A1) et une roue d'impulseur (11) ;
- une roue de turbine (12) solidaire en rotation, par une liaison sans jeu, d'un moyeu de turbine (18) qui est propre à être lié en rotation à un arbre mené (A2) ;
- un embrayage de verrouillage (16) du couplage des arbres menant (A1) et mené (A2) comportant un piston (76), mobile axialement pour lier, de manière débrayable, une deuxième coquille (2) du carter à l'arbre mené (A2), en serrant au moins un disque de friction (80) solidaire en rotation, d'une part, de la deuxième coquille (2) de carter par l'intermédiaire d'une première pièce de liaison (82) et, d'autre part, de l'élément d'entrée (26, 28) d'un dispositif d'amortissement (20) par l'intermédiaire d'une deuxième pièce de liaison (84) ;
du type dans lequel le dispositif d'amortissement (20) comprend des organes élastiques (50) à action circonférentielle interposés entre deux rondelles de guidage (26, 28) formant l'élément d'entrée et un voile (29) formant l'élément de sortie et qui est solidaire en rotation de l'arbre mené (A2), les éléments d'entrée et de sortie étant liés en rotation avec une capacité de débattement angulaire qui est limitée par des moyens de butée (38), et du type comportant une voie d'alimentation (V1) du carter en fluide et une voie d'évacuation (V2) du fluide,
le dispositif d'amortissement (20) comportant des moyens (100, 110, 116, 120, 138, 140) pour restreindre la circulation du fluide dans une direction globalement radiale, au moins à l'intérieur de l'espace axial avant (E1), qui est situé entre la rondelle avant de guidage (28) et le voile (29), de manière à favoriser la circulation du fluide, de la voie d'alimentation (V1) vers la voie d'évacuation (V2), à travers l'embrayage de verrouillage (16),
**caractérisé en ce que** lesdits moyens pour restreindre la circulation du fluide comportent au moins une rondelle élastique avant (100) à effet axial qui est interposée axialement entre le voile (29) et la rondelle avant de guidage (28), de manière à former une barrière à l'encontre de la circulation radiale du fluide à l'intérieur de l'espace axial avant (E1) du dispositif d'amortissement (20), et/ou
au moins une rondelle élastique arrière (110) à effet axial qui est interposée axialement entre le voile (29) et une surface radiale en vis-à-vis vers l'arrière, et qui est disposée radialement à l'intérieur, par rapport aux organes élastiques (50), de manière à former une barrière à l'encontre de la circulation radiale du fluide à l'intérieur de l'espace axial arrière (E2), situé entre le voile (29) et la rondelle arrière de guidage (26).

2. Appareil (10) selon la revendication 1, **caractérisé en ce que** chaque rondelle élastique (100, 110) est une rondelle tronconique.

3. Appareil (10) selon l'une quelconque des revendications 1 ou 2, **caractérisé en ce que** la rondelle élastique (100, 110) est centrée par rapport à l'axe au moyen d'un profil complémentaire de centrage (108, 112, 114, 118) qui est réalisé dans la rondelle de guidage (26, 28) associée, ou dans le voile (29).

4. Appareil (10) selon la revendication précédente, **caractérisé en ce que** le profil de centrage comporte plusieurs frappes (118) formant, sur la rondelle de guidage (28) associée ou sur le voile (29), des reliefs de centrage répartis angulairement.

5. Appareil (10) selon l'une quelconque des revendications précédentes, **caractérisé en ce que** la rondelle arrière de guidage (26) est solidaire à rotation du moyeu de turbine (18).

6. Appareil (10) selon la revendication précédente, **caractérisé en ce que** la rondelle arrière de guidage (26) et le moyeu de turbine (18) sont solidaires à rotation par engrènement, au moyen de dents (30, 32) qui sont portées respectivement par la périphérie intérieure de la rondelle arrière de guidage (26) et par la périphérie extérieure du moyeu de turbine (18).

7. Appareil (10) selon la revendication 5 ou 6, **caractérisé en ce que** le moyeu de turbine (18) comporte une surface radiale annulaire continue (116) qui vient en appui axial contre la face arrière du voile (29), de manière à empêcher la circulation radiale du fluide à l'intérieur de l'espace axial arrière (E2).

8. Appareil (10) selon la revendication 5 ou 6 prise en combinaison avec la revendication 3, **caractérisé en ce que** la rondelle élastique arrière (110) est interposée axialement entre le voile (29) et la face avant du moyeu de turbine (18).

9. Appareil (10) selon la revendication précédente, **caractérisé en ce que** la surface (114) du moyeu de turbine (18) susceptible d'être en contact avec la rondelle élastique arrière (110), et/ou la rondelle élastique (110), est traitée en vue d'augmenter sa dureté.

10. Appareil (10) selon l'une quelconque des revendications précédentes, **caractérisé en ce que** la partie centrale (54) de la rondelle avant de guidage (28), et/ou la partie centrale (56) de la rondelle arrière de guidage (26), qui est située au droit des organes élastiques (50); est pleine, grâce à quoi le fluide ne peut circuler dans l'espace axial associé (E1, E2) en traversant la partie centrale (54, 56) de la rondelle de guidage (26, 28).

11. Appareil (10) selon la revendication précédente, **caractérisé en ce que** le dispositif d'amortissement (20) comporte des paires de coupelles (130, 132) qui sont agencées dans les parties centrales (54, 56) des rondelles de guidage (26, 28), de manière à former des surfaces d'appui pour les organes élastiques (50) à action circonférentielle.

12. Appareil (10) selon l'une quelconque des revendications précédentes, **caractérisé en ce que** chaque rondelle de guidage (26, 28) comporte un bord périphérique extérieur continu (34, 36), et **en ce que** les deux bords extérieurs (34, 36) sont adjacents, de manière à fermer la périphérie externe du dispositif d'amortissement (20).

13. Appareil (10) selon l'une quelconque des revendications précédentes, **caractérisé en ce que** le bord périphérique extérieur (34) d'une des rondelles de guidage (26) se prolonge axialement vers l'arrière par un déflecteur (140) qui dévie le flux d'huile vers l'embrayage (16).

14. Appareil (10) selon la revendication précédente, **caractérisé en ce que** le déflecteur (140) forme une jupe axiale qui minimise l'espace axial entre la périphérie externe du dispositif d'amortissement (20) et la roue de turbine (12).

15. Appareil (10) selon la revendication 13 ou 14, **caractérisé en ce que** le déflecteur (140) est formé par une extension radiale extérieure de la rondelle arrière de guidage (26) en une seule pièce.

16. Appareil (10) selon l'une quelconque des revendications précédentes, **caractérisé en ce que** la rondelle avant de guidage (28) et le voile (29) comportent chacun des perçages axiaux (102, 104), qui sont agencés globalement axialement en vis-à-vis, en vue de faciliter la circulation du flux d'huile, qui a traversé l'embrayage (16), vers la voie d'évacuation (V2).

17. Appareil (10) selon l'une quelconque des revendications précédentes, **caractérisé en ce que** le moyeu de turbine (18) comporte des passages axiaux (106), au voisinage dans sa périphérie interne, en vue de faciliter la circulation du flux d'huile, qui a traversé l'embrayage (16), vers la voie d'évacuation (V2).

18. Appareil (10) selon la revendication précédente, **caractérisé en ce que** les passages axiaux (106) sont réalisés sous la forme de gorges axiales.

## Claims

1. Hydrokinetic coupling device (10), in particular for a motor vehicle, of the type comprising:
- a housing (1,2) consisting of a first shell (1) which couples in rotation a driving shaft (A1) and an impeller wheel (11);
- a turbine wheel (12), which integrally rotates, by play-free connection, with a turbine hub (18), designed to be coupled in rotation to a driven shaft (A2);
- a lockup clutch (16) in the coupling of the driving shaft (A1) and the driven shaft (A2) comprising an axially moving piston (76) for disengagingly linking a second shell (2) of the housing to the driven shaft (A2), by squeezing at least one friction washer (80), which integrally rotates, on the one hand, with the second housing shell (2) via the intermediary of a first connecting piece (82) and, on the other hand, with the input element (26, 28) of a damping element (20) via the intermediary of a second connecting piece (84);
- of the type in which the damping element (20) comprises circumferentially acting cup springs (50) mounted between two guide washers (26, 28) forming the input element and a web (29) forming the output element, and which rotates integrally with the driven shaft (A2), the input and output elements being coupled in rotation with an angular displacement capacity, which is restricted by stop means (3 8), and of the type comprising a channel (V1) to supply fluid to the housing and a channel (V2) to discharge fluid,
- the damping element (20) comprising means (100, 110, 116, 120, 138, 140) of restricting the essentially radial circulation of the fluid, at least inside the front axial space (E1), which is located between the front guide washer (28) and the web (29), such that the fluid circulates through the lockup clutch (16) from the supply channel (V1) to the discharge channel (V2), **characterized in that** the means to restrict the circulation of the fluid comprise at least one axially acting front cup spring (100), which is axially mounted between the web (29) and the front guide washer (28), so as to form a barrier against the radial circulation of the fluid inside the front axial space (E1) of the damping element (20) and/or
at least one axially acting rear cup spring (110), which is axially mounted between the web (29) and a radial surface facing one another to the rear, and which is disposed radially inside, with respect to the cup springs (50), so as to form a barrier against the radial circulation of the fluid inside the rear axial space (E2), located between the web (29) and the rear guide washer (26).

2. Device (10) according to claim 1, **characterized in that** each cup spring (100, 110) is a tapered washer.

3. Device (10) according to either of claims 1 or 2, **characterized in that** the cup spring (100,110) is centred, with respect to the axis, by means of a complementary centering profile (108, 112, 114, 118), which is arranged in the associated guide washer (26, 28) or in the web (29).

4. Device (10) according to the above claim, **characterized in that** the centering profile comprises several impressions (118), forming angularly-distributed centering embossings on the associated guide washer (28) or on the web (29).

5. Device (10) according to anyone of the above claims, **characterized in that** the rear guide washer (26) integrally rotates with the turbine hub (18).

6. Device (10) according to the above claim, **characterized in that** the rear guide washer (26) and the turbine hub (18) integrally rotate by the engagement of teeth (30, 32), which are arranged respectively on the inner periphery of the rear guide washer (26) and on the outer periphery of the turbine hub (18).

7. Device (10) according to the claim 5 or 6, **characterized in that** the turbine hub (18) comprises a continuous annular radial surface (116), which comes to axially rest against the rear face of the web (29), so as to prevent the radial circulation of the fluid inside the rear axial space (E2).

8. Device (10) according to claim 5 or 6, taken in combination with claim 3, **characterized in that** the rear cup spring (110) is axially mounted between the web (29) and the front face of the turbine hub (18).

9. Device (10) according to the above claim, **characterized in that** the surface (114) of the turbine hub (18) liable to be in contact with the rear cup spring (110) and/or the cup spring (110), is treated in order to increase its hardness.

10. Device (10) according to anyone of the above claims, **characterized in that** the central part (54) of the front guide washer (28) and/or the central part (56) of the rear guide washer (26), which is located in front of the cup springs (50), is solid as a result of which the fluid cannot circulate in the associated axial space (E1, E2) by passing through the central part (54, 56) of the guide washer (26, 28).

11. Device (10) according to the above claim, **characterized in that** the damping element (20) comprises pairs of cups (130, 132), which are arranged in the central parts (54, 56) of the guide washers (26, 28), so as to form bearing surfaces for the circumferentially acting cup springs (50).

12. Device (10) according to anyone of the above claims, **characterized in that** each guide washer (26, 28) comprises a continuous outer peripheral edge (34, 36), and **in that** the two outer edges (34, 36) are adjacent, so as to close the outer circumference of the damping element (20).

13. Device (10) according to any of the above claims, **characterized in that** the outer peripheral edge (34) of one of the guide washers (26) is extended axially to the rear by a baffle (140), which diverts the flow of oil to the clutch (16).

14. Device (10) according to the above claim, **characterized in that** the baffle (140) forms an axial skirt, which minimizes the axial space between the outer circumference of the damping element (20) and the turbine wheel (12).

15. Device (10) according to claim 13 or 14, **characterized in that** the baffle (140) is integrally formed by an outer radial extension of the rear guide washer (26).

16. Device (10) according to anyone of the above claims, **characterized in that** the front guide washer (28) and the web (29) each comprise axial borings (102, 104), which are arranged essentially axially facing one another, in order to facilitate the circulation of the oil flow, which has passed through the clutch (16), to the discharge channel (V2).

17. Device (10) according to anyone of the above claims, **characterized in that** the turbine hub (18) comprises axial passages (106), adjacent to its inner circumference, in order to facilitate the circulation of the oil flow, which has passed through the clutch (16), to the discharge channel (V2).

18. Device (10) according to the above claim, **characterized in that** the axial passages (106) are provided in the form of axial grooves.

## Patentansprüche

1. Hydrodynamischer Momentwandler (10), insbesondere für ein Kraftfahrzeug, umfassend:
- ein Gehäuse (1, 2), gebildet aus einer ersten Schale (1), die eine Antriebswelle (A1) und ein Impulsrad (11) drehfest verbindet;
- ein Turbinenrad (12), das durch eine spielfreie Verbindung drehfest mit einer Nabe (18) verbunden ist, die drehfest mit einer Abtriebswelle (A2) verbunden werden kann;
- eine Verriegelungskupplung (16) zur Kupplung der Antriebswelle (A1) und der Abtriebswelle (A2), die einen Kolben (76) aufweist, der axial beweglich ist, um auskuppelbar eine zweite Schale (2) des Gehäuses mit der Abtriebswelle (A2) zu verbinden, indem zumindest eine Reibscheibe (80) eingespannt wird, die einerseits mit der zweiten Schale (2) des Gehäuses über einen ersten Verbindungsteil (82) und andererseits mit dem Eingangselement (26, 28) einer Dämpfvorrichtung (20) über einen zweiten Verbindungsteil (84) drehfest verbunden ist;
wobei die Dämpfvorrichtung (20) in Umfangsrichtung wirksame elastische Organe (50) aufweist, die zwischen zwei Führungsscheiben (26, 28), die das Eingangselement bilden, und einen Flansch (29), der das Ausgangselement bildet und mit der Abtriebwelle (A2) drehfest verbunden ist, eingefügt sind, wobei das Eingangselement und das Ausgangselement mit einer Kapazität zur winkelmäßigen Auslenkung drehfest miteinander verbunden sind, die durch Anschlagmittel (38) begrenzt ist, und umfassend einen Versorgungskanal (V1) des Gehäuses mit Fluid und einen Ableitkanal (V2) des Fluids,
wobei die Dämpfvorrichtung (20) Mittel (100, 110, 116, 120, 138, 140) aufweist, um die Zirkulation des Fluids in eine insgesamt radiale Richtung zumindest im Inneren des vorderen Axialraums (E1) einzuschränken, der sich zwischen der vorderen Führungsscheibe (28) und dem Flansch (29) befindet, so dass die Zirkulation des Fluids von dem Versorgungskanal (V1) zu dem Ableitkanal (V2) durch die Verriegelungskupplung (16) begünstigt wird,
**dadurch gekennzeichnet, dass** die besagten Mittel zum Einschränken der Zirkulation des Fluids mindestens eine vordere elastische Scheibe (100) mit axialer Wirkung aufweisen, die axial zwischen den Flansch (29) und die vordere Führungsscheibe (28) derart eingefügt ist, dass eine Barriere gegen die radiale Zirkulation des Fluids im Inneren des vorderen Axialraums (E1) der Dämpfvorrichtung (20) gebildet wird, und/oder
mindestens eine hintere elastische Scheibe (110) mit axialer Wirkung aufweisen, die axial zwischen den Flansch (29) und eine nach hinten gegenüberliegende radiale Fläche eingefügt ist, und die im Verhältnis zu den elastischen Organen (50) radial innerhalb derart angeordnet ist, dass eine Barriere gegen die radiale Zirkulation des Fluids im Inneren des hinteren Axialraums (E2), der sich zwischen dem Flansch (29) und der hinteren Führungsscheibe (28) befindet, gebildet wird.

2. Momentwandler (10) nach Anspruch 1, **dadurch gekennzeichnet, dass** jede elastische Scheibe (100, 110) eine kegelstumpfförmige Scheibe ist.

3. Momentwandler (10) nach einem der Ansprüche 1 oder 2, **dadurch gekennzeichnet, dass** die elastische Scheibe (100, 110) in Bezug auf die Achse mittels eines komplementären Zentrierprofils (108, 112, 114, 118), das in der dazugehörenden Führungsscheibe (26, 28) oder in dem Flansch (29) hergestellt ist, zentriert ist.

4. Momentwandler (10) gemäß dem vorhergehenden Anspruch, **dadurch gekennzeichnet, dass** das Zentrierprofil mehrere Prägungen (118) aufweist, die auf der dazugehörenden Führungsscheibe (28) oder auf dem Flansch (29) winkelig verteilte Zentrierreliefs bilden.

5. Momentwandler (10) nach einem der vorhergehenden Ansprüche, **dadurch gekennzeichnet, dass** die hintere Führungsscheibe (26) drehfest mit der Turbinennabe (18) verbunden ist.

6. Momentwandler (10) nach dem vorhergehenden Anspruch, **dadurch gekennzeichnet, dass** die hintere Führungsscheibe (26) und die Turbinennabe (18) drehfest durch Verzahnen mittels Zähnen (30, 32) verbunden sind, die jeweils von dem Innenumfang der hinteren Führungsscheibe (26) und dem Außenumfang der Turbinennabe (18) getragen werden.

7. Momentwandler (10) nach Anspruch 5 oder 6, **dadurch gekennzeichnet, dass** die Turbinennabe (18) eine kontinuierliche ringförmige radiale Fläche (116) aufweist, die gegen die hintere Fläche des Flanschs (29) derart zum axialen Aufliegen kommt, dass die radiale Zirkulation des Fluids im Inneren des hinteren Axialraums (E2) verhindert wird.

8. Momentwandler (10) nach Anspruch 5 oder 6, in Kombination mit Anspruch 3, **dadurch gekennzeichnet, dass** die hintere elastische Scheibe (110) axial zwischen den Flansch (29) und die Vorderseite der Turbinennabe (18) eingefügt ist.

9. Momentwandler (10) gemäß dem vorhergehenden Anspruch, **dadurch gekennzeichnet, dass** die Fläche (114) der Turbinennabe (18), die geeignet ist, mit der hinteren elastischen Scheibe (110) in Berührung zu kommen, und/oder die elastische Scheibe (110) zum Steigern ihrer Härte behandelt ist.

10. Momentwandler (10) nach einem der vorhergehenden Ansprüche, **dadurch gekennzeichnet, dass** der zentrale Teil (54) der vorderen Führungsscheibe (28) und/oder der zentrale Teil (56) der hinteren Führungsscheibe (26), der den elastischen Organen (50) gegenüberliegt, geschlossen ist, so dass das Fluid nicht durch Durchqueren des zentralen Teils (54, 56) der Führungsscheibe (26, 28) in dem dazugehörenden Axialraum (E1, E2) zirkulieren kann.

11. Momentwandler (10) nach dem vorhergehenden Anspruch, **dadurch gekennzeichnet, dass** die Dämpfvorrichtung (20) Schalenpaare (130, 132) aufweist, die in den zentralen Teilen (54, 56) der Führungsscheiben (26, 28) derart angeordnet sind, dass sie Auflageflächen für die in Umfangsrichtung wirksamen elastischen Organe (50) bilden.

12. Momentwandler (10) nach einem der vorhergehenden Ansprüche, **dadurch gekennzeichnet, dass** jede Führungsscheibe (26, 28) einen kontinuierlichen äußeren Umfangsrand (34, 36) aufweist, und dass die zwei äußeren Ränder (34, 36) nebeneinander liegen, so dass sie den äußeren Umfang der Dämpfvorrichtung (20) schließen.

13. Momentwandler (10) nach einem der vorhergehenden Ansprüche, **dadurch gekennzeichnet, dass** sich der äußere Umfang (34) einer der Führungsscheiben (26) axial nach hinten durch einen Ablenker (140) verlängert, der den Ölstrom zu der Kupplung (16) umlenkt.

14. Momentwandler (10) nach dem vorhergehenden Anspruch, **dadurch gekennzeichnet, dass** der Ablenker (140) eine axiale Schürze bildet, die den Axialraum zwischen dem äußeren Umfang der Dämpfvorrichtung (20) und dem Turbinenrad (12) minimiert.

15. Momentwandler (10) nach Anspruch 13 oder 14, **dadurch gekennzeichnet, dass** der Ablenker (140) durch eine einstückig ausgeführte äußere radiale Erweiterung der hinteren Führungsscheibe (26) gebildet ist.

16. Momentwandler (10) nach einem der vorhergehenden Ansprüche, **dadurch gekennzeichnet, dass** die vordere Führungsscheibe (28) und der Flansch (29) jeweils axiale Bohrungen (102, 104) aufweisen, die insgesamt axial einander gegenüberliegend angeordnet sind, um die Zirkulation des Ölstroms, der die Kupplung (16) durchquert hat, zu dem Ableitkanal (V2) zu erleichtern.

17. Momentwandler (10) nach einem der vorhergehenden Ansprüche, **dadurch gekennzeichnet, dass** die Turbinennabe (18) axiale Durchgänge (106) in der Nähe ihres Innenumfangs aufweist, um die Zirkulation des Ölstroms, der die Kupplung (16) durchquert hat, zu dem Ableitkanal (V2) zu erleichtern.

18. Momentwandler (10) nach dem vorhergehenden Anspruch, **dadurch gekennzeichnet, dass** die axialen Durchgänge (106) in Form axialer Hohlkehlen hergestellt sind.
